# EUROPEAN PATENT APPLICATION

(11) **EP 4 431 642 A1**
(43) Date of publication of application: **18.09.2024**
(21) Application number: 22892898.2
(22) Date of filing: 11.11.2022
(51) Int. Cl.: C25B 13/08, C02F 1/461, C25B 1/04, C25B 9/23, C25B 13/02

(54) **MEMBRANE, COMPOSITE MEMBRANE, MEMBRANE ELECTRODE ASSEMBLY, AND WATER ELECTROLYSIS DEVICE**

(30) Priority: 12.11.2021 JP 2021184821; 10.03.2022 JP 2022037354
(71) Applicant: Tokyo Institute of Technology, Tokyo 152-8550 (JP); Asahi Kasei Kabushiki Kaisha, Tokyo 1000006 (JP)
(72) Inventor: YAMAGUCHI Takeo, Tokyo 152-8550 (JP); NARAYANARU Sreekanth, Tokyo 152-8550 (JP); G.M. Anilkumar, Tokyo 152-8550 (JP); ILLATHVALAPPIL Rajith, Tokyo 152-8550 (JP)
(74) Representative: dompatent von Kreisler Selting Werner - Partnerschaft von Patent- und Rechtsanwälten mbB
(86) International application number: PCT/JP2022/042097
(87) International publication number: WO 2023/085400

(57) **Abstract**

A membrane and a composite membrane with excellent durability, which enable the manufacture of a water electrolysis device with high water electrolysis performance, a membrane electrode assembly and a water electrolysis device including the membrane are provided. The membrane includes a fluoro compound having an ionic group, has OH⁻ ion conductivity, and has a conductivity of more than 2 × 10⁻² S/cm.

## Description

### Technical Field

The present invention relates to a membrane, a composite membrane, a membrane electrode assembly and a water electrolysis device.

### Background Art

Electrolysis of water (water electrolysis) is attracting attention as an electric-hydrogen storage system that stores renewable energy as hydrogen energy because it can convert electricity into hydrogen without producing carbon dioxide. Water electrolysis methods include alkaline water electrolysis and solid polymer water electrolysis. Alkaline water electrolysis using alkaline aqueous solution has the disadvantage of not being able to follow the fluctuation in output of renewable energy whose output is unstable. Proton-type solid polymer water electrolysis using a proton-conducting membrane requires the use of precious metal such as platinum for corrosion resistance, which increases equipment manufacturing cost.

Therefore, solid alkaline water electrolysis using an anion-conducting membrane has been considered (for example, Patent Literature 1). For solid alkaline water electrolysis, there is no need to use precious metal for electrodes and the like, and equipment cost can be reduced.

Various proposals have been made for anion-conducting membranes (for example, Patent Literatures 2 and 3).

### Citation List

### Patent Literature

Patent Literature 1: Japanese Unexamined Patent Application Publication No. 2018-197398
Patent Literature 2: Japanese Unexamined Patent Application Publication No. 2021-161472
Patent Literature 3: Japanese Unexamined Patent Application Publication No. 2015-095286

### Summary of Invention

### Technical Problem

Recently, from the viewpoint of improving efficiency, alkaline water electrolysis using a porous base material with pores ranging in size from tens to hundreds of nm has been considered. However, the problem with the porous base material is that the resulting oxygen gas and hydrogen gas can permeate through it, and since this problem must be addressed, there was a limit to thinning.

In addition, membranes with excellent durability, especially against radicals that are produced as a byproduct when operating at high voltages are desired.

An object of the present invention is to provide a membrane and a composite membrane with excellent durability, which enable the manufacture of a water electrolysis device with high water electrolysis performance, a membrane electrode assembly and a water electrolysis device including the membrane.

### Solution to Problem

The membrane of the present invention includes a fluoro compound having an ionic group, has OH⁻ ion conductivity, and has a conductivity of more than 2 × 10⁻² S/cm in an alkaline aqueous solution.

The above membrane may have a conductance of 5 S/cm² or more in an alkaline aqueous solution.

The above membrane may have a film thickness of 1 to 100 µm.

In the above membrane, the fluoro compound may have an ion exchange capacity of 1,200 g/eq or less, or 1,000 g/eq or less.

In the above membrane, the fluoro compound may have a structure represented by the following formula (1): 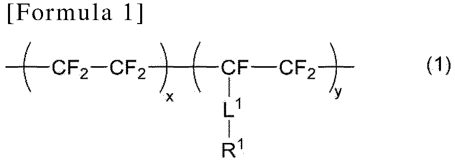
in which R¹ is an ionic group,
L¹ is a divalent linking group and
x and y are each independently an integer of 1 or more.

In the above membrane, the above L¹ may be a group represented by the following formula (2):

*-(O)ₐ-R²-** (2)

in which R² is a fluoroalkylene group having 1 to 20 carbon atoms and optionally having an ether bond between the carbon-carbon bond,
a is 0 or 1,
* is a bond with the main chain and ** is a bond with R¹.

In the above membrane, the above R² may be a fluoroalkylene group having 1 to 4 carbon atoms.

In the above membrane, the ionic group may be a sulfonic acid group.

In the above membrane, a porous base material may be filled with the fluoro compound.

The above membrane may have a conductivity of 2.5 × 10⁻² S/cm or more.

The above membrane may have a conductivity of 3 × 10⁻² S/cm or more.

The above membrane may have an average cluster size of 5 nm or more.

The composite membrane of the present invention has the membrane of the present invention on at least one surface of a first membrane, and the first membrane is a non-porous membrane, a membrane with a cluster having an average cluster size of less than 5 nm, or a pore-filling membrane including a porous base material and a polyarylene polymer with which pores of the base material are filled.

The membrane electrode assembly of the present invention includes the above membrane or the above composite membrane, and an anode catalyst and a cathode catalyst.

In the above membrane electrode assembly, the anode catalyst may have a porous body of metal or metal alloy.

In the above membrane electrode assembly, the anode catalyst may have a nickel foam.

In the above membrane electrode assembly, the anode catalyst may be a catalyst having a nickel oxide layer including NiOOH and a layer including NiFe on a nickel foam in that order, or may be a catalyst having a phosphide layer including Ni₂P and Fe₂P on a nickel foam.

In the above membrane electrode assembly, the cathode catalyst may have a porous body of metal or metal alloy.

In the above membrane electrode assembly, the cathode catalyst may have a layer including Ru and metal phosphide on the porous body.

The water electrolysis device of the present invention includes the membrane electrode assembly.

### Advantageous Effects of Invention

The present invention provides a membrane and a composite membrane with excellent durability, which enable the manufacture of a water electrolysis device with high water electrolysis performance, a membrane electrode assembly and a water electrolysis device including the membrane.

### Brief Description of Drawings

[Fig. 1] Fig. 1 is a schematic view illustrating an example of a cluster network.
[Fig. 2] Fig. 2 is a spectrum showing the results of a SAXS measurement.
[Fig. 3A] Fig. 3A is a schematic view illustrating an example of a composite membrane.
[Fig. 3B] Fig. 3B is a schematic view illustrating another example of a composite membrane.
[Fig. 4] Fig. 4 is a schematic cross-sectional view illustrating an example of a water electrolysis device.
[Fig. 5] Fig. 5 is a schematic cross-sectional view illustrating an example of an anode catalyst.
[Fig. 6] Fig. 6 is a schematic cross-sectional view illustrating an example of an anode catalyst.
[Fig. 7] Fig. 7 is a schematic cross-sectional view illustrating an example of a cathode catalyst.
[Fig. 8] Fig. 8 is a graph showing the results of evaluation of the performance of MEA.
[Fig. 9] Fig. 9 is a graph showing the results of evaluation of the performance of MEA.
[Fig. 10] Fig. 10 is a graph showing the results of evaluation of the performance of MEA.
[Fig. 11] Fig. 11 is a graph showing the results of evaluation of the performance of MEA.
[Fig. 12] Fig. 12 is a graph showing the results of evaluation of the performance of MEA.

### Description of Embodiments

In the following, the structure of the membrane, the membrane electrode assembly and the water electrolysis device of the present invention will be described.

The expression "to" indicating numerical ranges means that the upper limits and the lower limits are inclusive. For clarity of explanation, the following descriptions and drawings are simplified as appropriate. Furthermore, matters necessary for carrying out the present invention not specifically mentioned herein may be understood as matters of design by those skilled in the art based on the related art in the field.

### [Membrane]

The membrane according to an embodiment of the present invention includes a fluoro compound having an ionic group (hereinafter may be simply referred to as a "fluoro compound"), has OH⁻ ion conductivity, and has a conductivity of more than 2 × 10⁻² S/cm in an alkaline aqueous solution. By using such a membrane of the present embodiment, for example, a water electrolysis device with high water electrolysis performance can be manufactured.

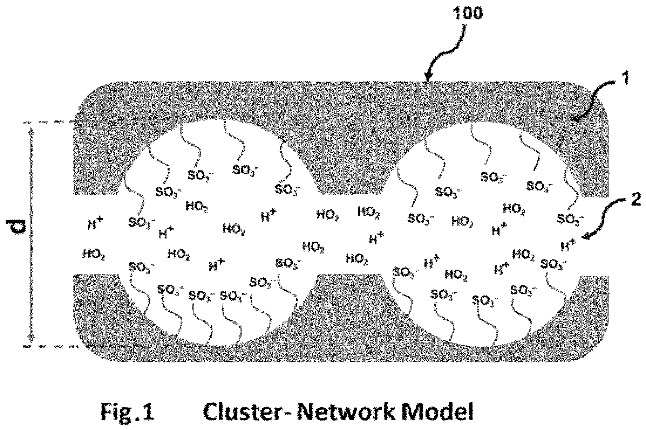

Examples of methods for increasing the conductivity of membranes include setting the average cluster size in the membrane to 5 nm or more. The cluster and the cluster size will be described with reference to Fig. 1. Fig. 1 is a schematic view illustrating an example of a cluster network. The illustration in Fig. 1 has a membrane 100 including a fluoro compound 1 having a sulfonic acid group (-SO₃H) as the ionic group, and a cluster 2 formed in the membrane.

The cluster 2 is an ionic cluster formed by ionic groups the fluoro compound has gathering like reverse micelles. Clusters 2 are considered to be linked together to form a network in the membrane. Ions and water can move within the cluster network, resulting in conductivity of anions (OH⁻ ions) while the membrane has a sulfonic acid group which is an anionic group. As shown in Comparative Example 1 described later, Nafion (made by Sigma-Aldrich), a commercially available perfluoro polymer with a sulfonic acid group, has an average cluster size of about 4 nm when swollen and is insufficiently conductive for OH⁻ ions.

The membrane of the present embodiment has an average cluster size (d in Fig. 1) of 5 nm or more, which allows OH⁻ ions to permeate through the pore of the membrane, greatly improving the transport efficiency of an aqueous alkali solution and providing excellent conductivity of anions. For this reason, a membrane having a conductivity of more than 2 × 10⁻² S/cm, preferably 2.5 × 10⁻² S/cm or more, and more preferably 3 × 10⁻² S/cm or more can be obtained. By adjusting the film thickness, a membrane having a conductance in an alkaline aqueous solution of, for example, 5 S/cm² or more, preferably 6 S/cm² or more, more preferably 8 S/cm² or more, even more preferably 10 S/cm² or more, and still more preferably 12 S/cm² or more, and particularly preferably 15 S/cm² may be obtained. High conductance membranes can be used to reduce overvoltage. Furthermore, since a fluoro compound is used, the membrane of the present embodiment has excellent durability against radicals and the like. While the above conductivity is estimated to be achieved mainly by the conduction of OH⁻ ions, the conduction of other ions may also contribute to the high conductivity.

For example, the membrane of Example 1 described later has a conductivity of 3 × 10⁻² S/cm or more, and thus by adjusting the film thickness to 30 µm, 15 µm and 10 µm, a conductance of 10 S/cm² or more, 20 S/cm² or more and 30 S/cm² or more can be achieved.

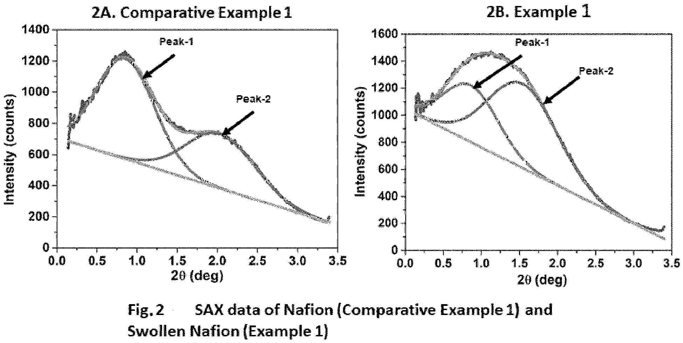

Next, the method for measuring the cluster size will be described with reference to Fig. 2. Fig. 2A (left) and Fig. 2B (right) are, in that order, a spectrum showing the results of a SAXS (small angle X-ray scattering) measurement of the membrane of Comparative Example 1 and the membrane of Example 1. The membrane to be measured is swollen with water, and the measurement is performed by SAXS. In Fig. 2, Peak-1 corresponds to fluorocarbon and Peak-2 corresponds to the cluster. Peaks are separated in consideration of little spectral shift in Peak-1, and the pore size is analyzed for Peak-2 to determine the average value of the cluster sizes.

The membrane of the present embodiment has the above average cluster size of 5 nm or more and thus provides excellent conductivity of anions. Meanwhile, the upper limit of the cluster size is not particularly limited, and the average cluster size is preferably 20 nm or less, and more preferably 10 nm or less. A membrane with an average cluster size of 20 nm or less reduces permeation of oxygen gas and hydrogen gas, and thus the membrane can be thinned, and as a result, conductivity of anions can also be improved. The method for adjusting the cluster size will be described later.

The thickness of the membrane of the present embodiment is not particularly limited. For example, the membrane may have a film thickness of 0.5 to 500 µm. The membrane has a film thickness of preferably 200 µm or less, and more preferably 100 µm or less from the viewpoint of the improvement in conductivity of anions. The membrane has a film thickness of preferably 1 µm or more, and more preferably 5 µm or more from the viewpoint of reduction of permeation of gas.

The membrane of the present embodiment includes at least a fluoro compound having an ionic group, and may also include other component to the extent that the effect of the present invention is achieved. By using a fluoro compound having an ionic group, a membrane which has excellent alkali resistance and has the above cluster network is formed.

The fluoro compound means a compound in which 1 or more hydrogen atoms in the hydrocarbon group is substituted with a fluorine atom. A perfluoro compound in which all the hydrogen atoms in the hydrocarbon group are substituted with a fluorine atom is preferred from the viewpoint of alkali resistance.

The fluoro compound having an ionic group is preferably a polymer, and more preferably a polymer including the structure represented by the following formula (1) from the viewpoints of film formability and stability of the cluster network. 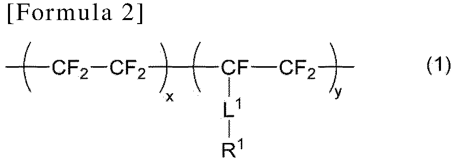
in which R¹ is an ionic group,
L¹ is a divalent linking group and
x and y are each independently an integer of 1 or more.

The structure represented by the formula (1) has a hydrophobic fluoroalkyl chain as the main chain, and has a side chain having an ionic group. By using a polymer having a structure represented by the formula (1), a membrane which has the above cluster network is easily formed.

The order of the linkage of (CF₂CF₂) and (CF(L¹R¹)CF₂) in the formula (1) is optional, and the linkage may be in blocks, alternate or random. In the formula (1), x and y each represent the number of (CF₂CF₂)s and (CF(L¹R¹)CF₂)s, and x and y are each independently an integer of 1 or more.

In the present embodiment, the ionic group means a group which can be formed into an ion in the presence of water. Examples of ionic groups in R¹ include a sulfonic acid group (-SO₃H group), a phosphate group (-H₂PO₄ group), a carboxylic acid group (-COOH group), an amino group (-NH₃ group) and a quaternary amino group (-N(CH₃)₃ group). A sulfonic acid group and a carboxylic acid group are preferred, and a sulfonic acid group is more preferred. The ionic group may be ionized, and H in the acid group may be substituted with an alkaline metal ion, an alkaline earth metal ion or an ammonium ion, or the amino group may be in the form of an ammonium ion or a salt.

When the fluoro compound includes a plurality of R¹s, the R¹s may be the same or different from each other.

L¹ is a linking group that links the main chain and R¹. The linking group L¹ is not particularly limited, and may have a substituent, and is preferably a fluoroalkylene group optionally having an ethereal oxygen atom between the carbon-carbon bond, and more preferably a group represented by the following formula (2), because a membrane having a cluster network can be easily obtained.

*-(O)ₐ-R²-** (2)

in which R² is a fluoroalkylene group having 1 to 20 carbon atoms and optionally having an ether bond (-O-) between the carbon-carbon bond,
a is 0 or 1,
* is a bond with the main chain and ** is a bond with R¹.

When the above a is 0, the carbon atom in the main chain is directly bonded to R². When the above a is 1, the carbon atom in the main chain is bonded to R² through an oxygen atom.

The fluoroalkylene group in R² may be linear or branched. The fluoroalkylene group may have 1 to 20, preferably 1 to 12, more preferably 1 to 6, and even more preferably 1 to 4 carbon atoms from the viewpoints of mechanical strength and ion exchange capacity of the membrane. Furthermore, a fluoroalkylene group having no ether bond is preferred from the viewpoint of mechanical strength of the membrane.

Preferred examples of R² include -CF₂-, -CF₂CF₂-, -CF(CF₃)CF₂-, - CF₂CF₂CF₂-, -CF₂CF(CF₃)CF₂-, -CF₂CF₂CF₂CF₂-, -CF₂CF(CF₃)CF₂CF₂-, - CF₂CF₂CF₂CF₂CF₂-, -CF₂CF₂CF₂CF₂CF₂CF₂-, -CF₂OCF₂-, -CF(CF₃)OCF₂-, - CF₂CF(CF₃)OCF₂CF₂-, -CF₂CF₂CF₂OCF₂CF₂- and -CF₂CF₂CF₂OCF₂CF₂CF₂-. Of them, -CF₂CF₂-, -CF₂CF₂CF₂-, -CF₂CF₂CF₂CF₂- or -CF₂CF(CF₃)OCF₂CF₂- are preferred, and -CF₂CF₂-, -CF₂CF₂CF₂- or -CF₂CF₂CF₂CF₂- are more preferred.

When the fluoroalkylene group includes a plurality of R²s in the molecule, R²s may be the same or different from each other.

x in the formula (1) may be an integer of 1 or more, preferably 1 to 80,000, more preferably 1 to 50,000, and even more preferably 2 to 5,000. y in the formula (1) may be an integer of 1 or more, preferably 1 to 80,000, more preferably 1 to 50,000, and even more preferably 2 to 5,000.

The ratio between x and y is not particularly limited and x : y may be adjusted in the range of 1 : 9 to 9 : 1.

The weight average molecular weight of the fluoro compound having an ionic group may be selected, for example, from the range of 10,000 to 1,000,000 in terms of polystyrene.

The above fluoro compound may have an ion exchange capacity of 1,200 g/eq or less, preferably 1,100 g/eq or less, more preferably 1,000 g/eq or less, and even more preferably 800 g/eq or less from the viewpoint of the improvement in the conductance and the conductivity of the membrane. The ion exchange capacity may be adjusted, for example, based on the structure of L¹ and the ratio between x and y in the formula (1).

The polymer including the structure represented by the formula (1) may be synthesized, for example, by copolymerizing tetrafluoroethylene and tetrafluoroethylene substituted with L¹R¹. Alternatively, for example, tetrafluoroethylene and tetrafluoroethylene substituted with L¹-SO₂F may be copolymerized. In that case a polymer including the structure represented by the formula (1) is obtained by substituting SO₂F with SO₃H, for example, after forming membrane. In addition, using Japanese Unexamined Patent Application Publication No. 2018-095663 as a reference, the polymer may be synthesized by copolymerizing tetrafluoroethylene with tetrafluoroethylene having a substituent into which an ionic group can be introduced after polymerization and then introducing the ionic group thereinto.

Furthermore, a commercially available product may be used as the polymer including the structure represented by the formula (1). Examples of commercially available products include Nafion (registered trademark, made by Merch) and Aquivion (registered trademark, made by Solvay).

### (Method for adjusting cluster size)

It is preferable that the average cluster size of the cluster of the fluoro compound having an ionic group be adjusted to 5 nm or more when the compound is swollen in water or an alkaline aqueous solution. Fluoro polymer membranes usually have an average cluster size of less than 5 nm before the treatment described later. To set the average cluster size to 5 nm or more, the average cluster size may be adjusted by changing ion exchange capacity and/or the structure of L¹ and R¹, or a treatment for increasing the cluster size may be carried out.

Examples of treatments for increasing the cluster size include a method in which a membrane including a fluoro compound having an ionic group is heated in a low volatile polar solvent. In the following, the method will be described in more detail.

First a membrane including a fluoro compound having an ionic group is prepared. A usual film forming method for polymer may be suitably selected as the film forming method. For example, a membrane may be prepared by dissolving or dispersing a fluoro compound having an ionic group in a solvent in which the fluoro compound having an ionic group can be dissolved or dispersed (e.g., alcohol and an alcohol-water mixed solvent), forming a coating on a base material using a known coating method, and then drying. Alternatively, a commercially available product prepared by film forming may be used.

A membrane may also be formed by filling pores of a porous base material with the fluoro compound having an ionic group. More specifically, first a porous base material and a solution or dispersion of the fluoro compound having an ionic group are prepared. Next, the porous base material is impregnated with a solvent such as acetone, and the solution or dispersion of the fluoro compound having an ionic group is dropped on that. Then, by thoroughly drying the resulting base material, a membrane in which pores of the porous base material are filled with the fluoro compound having an ionic group is prepared. A polyolefin base material such as polyethylene, ultra-high molecular weight polyethylene, polypropylene and polytetrafluoroethylene is preferred as the porous base material. A porous base material such as polytetrafluoroethylene (PTFE) and ultra-high molecular weight polyethylene are preferred from the viewpoint of durability.

The membrane obtained as described above is immersed in a low volatile polar solvent. Glycerol is preferred as the low volatile polar solvent. Next, by heating the membrane at 110 to 200°C for 10 minutes to 12 hours, a membrane with a cluster having an average cluster size of 5 nm or more is obtained. This treatment causes a dimensional change of membranes, but such dimensional change is reduced in the membrane prepared by filling a porous base material with a fluoro compound having an ionic group.

The above membrane according to the present embodiment has excellent anion (OH⁻ ion) conductivity and excellent chemical durability, and can reduce permeation of oxygen gas and hydrogen gas. Thus, the membrane may be suitably used as an anion-conducting membrane for solid alkaline water electrolysis and enables the manufacture of a water electrolysis device with high water electrolysis performance.

### [Composite membrane]

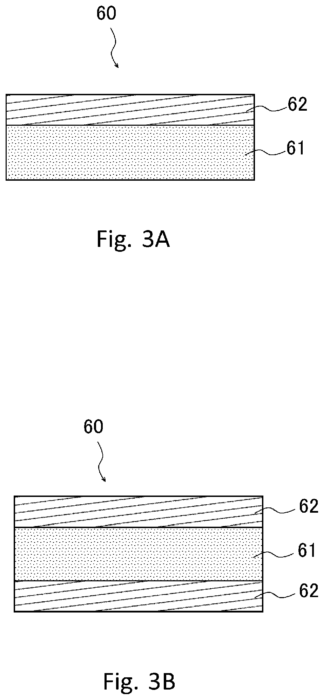

The composite membrane according to the present embodiment is a membrane including the above membrane of the present invention (hereinafter also referred to as a second membrane) on at least one surface of a first membrane. The first membrane is a non-porous membrane, a membrane with a cluster having an average cluster size of less than 5 nm, or a pore-filling membrane including a porous base material and a polyarylene polymer with which pores of the porous base material are filled. The composite membrane 60 shown in Fig. 3A has the second membrane 62 on one surface of the first membrane 61. The composite membrane 60 shown in Fig. 3B has the second membrane 62 on both surfaces of the first membrane 61.

The present composite membrane has the effect of reducing permeation of oxygen gas and hydrogen gas while maintaining the anion conductivity of the membrane according to the above embodiment.

The composite membrane 60 may have the second membrane 62 on one surface of the first membrane 61 as shown in Fig. 3A, or may have the second membrane 62 on both surfaces of the first membrane 61 as shown in Fig. 3B. In both composite membranes, the first membrane can reduce permeation of gas.

The above first membrane 61 is a non-porous membrane, a membrane with a cluster having an average cluster size of less than 5 nm, or a pore-filling membrane including a porous base material and a polyarylene polymer with which pores of the base material are filled. The material of the first membrane is not particularly limited, and it may have an ionic group or may not have an ionic group. Examples thereof include aromatic hydrocarbon, polyarylene polymer, perfluorocarboxylic acid and perfluoropolymer. A polyarylene polymer having an ionic group is preferred as the polyarylene polymer, and a polyarylene polymer having an amino group as the ionic group is more preferred. Specific examples of polyarylene polymers are those listed in Japanese Unexamined Patent Application Publication No. 2018-135487, Japanese Unexamined Patent Application Publication No. 2020-169287 and Japanese Unexamined Patent Application Publication No. 2021-42351.

Polyolefin base materials such as polyethylene, ultra-high molecular weight polyethylene, polypropylene and polytetrafluoroethylene are preferred as the porous base material in the pore-filling membrane. Porous base materials such as polytetrafluoroethylene (PTFE) and ultra-high molecular weight polyethylene are preferred from the viewpoint of durability. Examples of polyarylene polymers with which the polyolefin base material is filled are the same as described above.

The above first membrane may have a film thickness of, for example, 0.1 to 100 µm, and preferably 1 to 80 µm, and more preferably 5 to 50 µm from the viewpoints of anion conductivity and reduction of permeation of gas. Furthermore, in the composite membrane, the second membrane may have a smaller film thickness than in the case of using it as a single membrane, and may have a film thickness of, for example, 0.1 to 80 µm, and preferably 0.5 to 60 µm and more preferably 1 to 50 µm from the viewpoints of anion conductivity and reduction of permeation of gas. When the second membrane is disposed on both sides of the first membrane, it is preferable that each of the second membranes have the above film thickness.

The method for producing the present composite membrane is not particularly limited. For example, the second membrane according to the above present embodiment obtained by the above method may be bonded to the first membrane separately formed to prepare a composite membrane. Alternatively, the composite membrane may be prepared by dissolving or dispersing a fluoro compound having an ionic group in a solvent in which the fluoro compound having an ionic group can be dissolved or dispersed, coating the membrane according to the present embodiment therewith to form a coating, and then drying it.

### [Membrane electrode assembly and water electrolysis device]

The membrane electrode assembly according to the present embodiment includes the membrane or the composite membrane of the present embodiment, an anode catalyst and a cathode catalyst.

The water electrolysis device according to the present embodiment includes the above membrane electrode assembly.

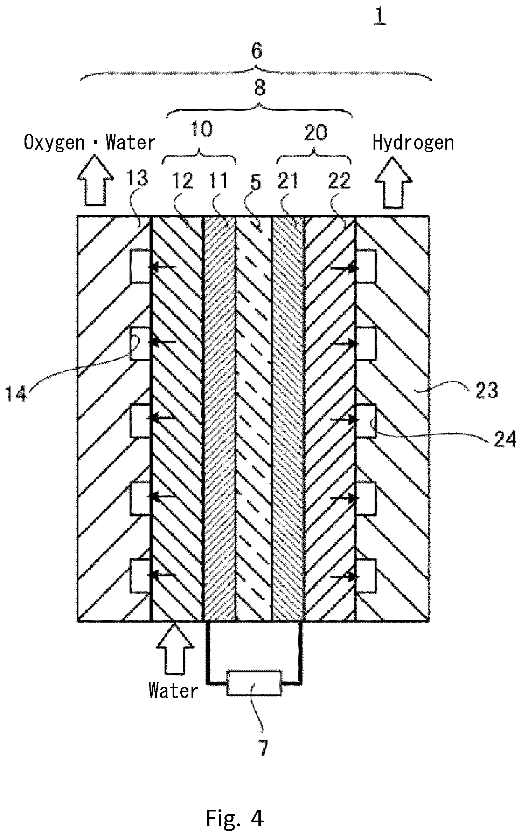

The structure of the membrane electrode assembly and the water electrolysis device will be described with reference to Fig. 4. Fig. 4 is a schematic cross-sectional view illustrating an example of a water electrolysis device. The water electrolysis device 1 illustrated in Fig. 4 includes a membrane 5, an anode 10 disposed on one surface of the membrane 5, a cathode 20 disposed on the other surface of the membrane 5, a power source 7 connected to the anode 10 and the cathode 20, and a unit for supplying water which supplies water or an alkaline aqueous solution to the cathode 20. The anode 10 may have at least an anode catalyst 11, and may also have the first diffusion layer 12. The cathode 20 may have at least a cathode catalyst 21, and may also have the second diffusion layer 22. The membrane electrode assembly 8 includes at least the anode catalyst 11 disposed on one side of the membrane 5 and the cathode catalyst 21 disposed on the other side of the membrane 5. In the example of Fig. 4, there is a cell 6 having a separator 13, 23 on the outer surface of the anode 10 and the cathode 20, respectively. The present water electrolysis device 1 may have a single cell 6 or a plurality of cells 6 stacked. The unit for supplying water supplies water to at least one of the cathode and the anode.

By using the membrane or the composite membrane of the present embodiment as the membrane 5, a water electrolysis device with high water electrolysis performance, excellent durability and reduced permeation of oxygen gas and hydrogen gas can be obtained.

When a composite membrane is used as the membrane 5, the second membrane may be disposed on the side of the anode catalyst or on the side of the cathode catalyst.

In the case where the water electrolysis device is a solid alkaline water hydrolysis device, and when, for example, voltage is applied to both electrodes while supplying water or an alkaline aqueous solution to the cathode 20, the following reaction occurs in the cathode 20 to generate hydrogen gas.

2H₂O + 2e⁻ → 2OH⁻ + H₂

Hydroxide ions (OH⁻) penetrate the membrane 5 and move to the anode 10. The following reaction occurs in the anode 10 to generate oxygen gas.

2OH⁻ → H₂O + 1/2O₂ + 2e⁻

The hydrogen and oxygen generated is discharged from the cell 6 through gas flow paths 14, 24 provided on the separators 13 and 23, respectively. The gas flow paths are connected, for example, to a storage tank through a gas-liquid separator not shown. After water is removed in the gas-liquid separator, hydrogen and oxygen are each stored in the storage tank, and the like.

Water supplied to the water electrolysis device may be pure water or an alkaline aqueous solution. By using the alkaline aqueous solution, water electrolysis can be performed more efficiently than using pure water. The solute in the alkaline aqueous solution is not particularly limited, and for example, 1M potassium hydroxide may be used.

The anode 10 may have at least an anode catalyst 11, and may also have the first diffusion layer 12. The anode catalyst 11 is preferably metal or metal alloy. The metals and metal alloys may be suitably selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of them.

Furthermore, it is preferable that the anode catalyst 11 be a porous body in consideration of the contact area with water and diffusion of water and gas. Examples of porous catalysts include a connected body of metal particles prepared by fusing particles of the above metal acting as a catalyst, a foamed body (foam) of the above metal, and a felt (nonwoven fabric) or mesh porous body formed from a wire-shaped or fibrous metal.

The anode catalyst 11 may be used after coating the surface of the above metal with a known electrolyte polymer (ionomer). Meanwhile, since alkaline aqueous solution moves in the membrane electrode assembly 8 to achieve ionic conductivity in the present embodiment, the membrane electrode assembly 8 has excellent ionic conductivity even without using electrolyte polymer. Furthermore, the absence of the electrolyte polymer coating on the anode catalyst further improves catalytic activity.

It is particularly preferable that the anode catalyst include nickel foam. To achieve both durability and high activity, (I) a catalyst having a nickel oxide layer including NiOOH and a layer including NiFe on a nickel foam in that order (hereinafter also referred to as catalyst (I)), and (II) a catalyst having a phosphide layer including Ni₂P and Fe₂P on a nickel foam (hereinafter also referred to as catalyst (II)) are preferred.

### <Catalyst (I)>

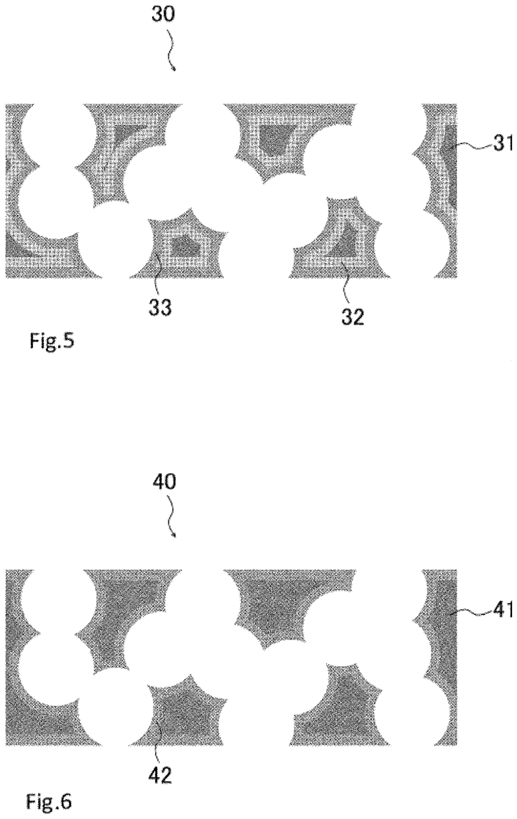

The catalyst having a nickel oxide layer including NiOOH and a layer including NiFe on a nickel foam in that order will be described with reference to Fig. 5. Fig. 5 is a schematic cross-sectional view illustrating the present catalyst. The catalyst 30 illustrated in Fig. 5 has a nickel oxide layer 32 including NiOOH and a layer 33 including NiFe on a nickel foam 31 in that order. In the example of Fig. 5, the inner surface of pores also has the above layer structure. The above layer structure allows the catalyst to have excellent durability and high activity even in an alkaline environment while a nickel foam is used.

The nickel oxide layer 32 includes NiOOH. Having the nickel oxide layer, the catalyst has higher durability and higher activity than the catalyst in which a layer including NiFe is formed directly on the nickel foam.

The nickel oxide layer may include at least NiOOH, and may include another nickel oxide to the extent that the effect of the present embodiment is achieved. Examples of other nickel oxide include NiO and Ni₂O₃.

The ratio of NiOOH in the nickel oxide layer is preferably 50% by mass or more, more preferably 80% by mass or more, and even more preferably 90% by mass or more based on 100% by mass of the nickel oxide layer.

In the catalyst (I), the nickel oxide layer has a thickness of preferably 50 to 500 nm and more preferably 100 to 400 nm. When the nickel oxide layer has a thickness of 50 nm or more, a catalyst with excellent durability and activity can be obtained. When the nickel oxide layer has a thickness of 500 nm or less, the catalyst is sufficiently effective.

The catalyst (I) has a layer including NiFe on the above nickel oxide layer. Formation of the NiFe layer on the nickel oxide layer reduces leaching of Fe, providing a catalyst with excellent durability.

It is preferable that the ratio of Fe in the catalyst (I) be 4 to 20% by mass base on the total amount of the catalyst including nickel foam. When the ratio of Fe is 4% by mass, a catalyst with excellent durability and activity can be obtained. Furthermore, when the ratio of Fe is 20% by mass or less, the catalyst is sufficiently effective.

The catalyst (I) has a thickness of preferably 100 to 2,000 µm, and more preferably 200 to 1,600 µm. When the catalyst (I) has a thickness of 100 µm or more, the catalyst has excellent durability and activity.

The thickness of the respective layers may be measured by a scanning electron microscope (SEM) and based on mapping with an energy dispersive X-ray spectrometer (EDX). The composition of the respective layers may be measured by X-ray photoelectron spectroscopy (XPS).

### (Method for producing catalyst (I))

Next, the method for producing the above catalyst (I) will be described. The method for producing the catalyst (I) includes a step for forming a nickel oxide layer including NiOOH on nickel foam. Formation of a nickel oxide layer including NiOOH on nickel foam allows a layer including NiFe to be easily formed, and also reduces leaching of the layer including NiFe.

Examples of methods for forming a nickel oxide layer on nickel foam includes a method in which a nickel oxide layer is formed by spraying particles of NiOOH, for example, by an aerosol deposition method, and a method in which the surface of nickel foam is oxidized. The method in which the surface of the base material is oxidized is preferred because a nickel oxide layer can be easily formed on the inner surface of the nickel foam. Electrochemical oxidation is preferred as the method of oxidation of the surface of the base material.

Examples of methods of electrochemical oxidation include a method in which first a nickel foam having a desired shape is prepared, the nickel foam is immersed, for example, in an alkaline electrolyte, and then voltage is applied thereto to oxidize it. The nickel foam may be produced by a known method, or a commercially available product may be used. Furthermore, if, for example, the nickel foam has an oxide layer, acid treatment may be performed as needed. By adjusting the time of application of voltage, the thickness of the nickel oxide layer can be controlled.

Formation of the nickel oxide layer may be checked using the Raman spectrum.

Next, a layer including NiFe is formed on the nickel oxide layer.

Examples of methods for forming a layer including NiFe on a nickel oxide layer includes a method in which a layer including NiFe is formed by spraying particles of NiFe, for example, by an aerosol deposition method, and a method in which Fe is electrodeposited. The method in which Fe is electrodeposited is preferred because a layer including NiFe can be easily formed on the inner surface of the nickel foam.

Examples of methods of electrodeposition of Fe include a method in which the above intermediate product is immersed in electrolyte including Fe²⁺ and then Fe is electrodeposited by applying voltage. By adjusting the time of application of voltage, the thickness of the layer including NiFe and the ratio of Fe in the catalyst can be controlled.

### <Catalyst (II)>

The catalyst having a phosphide layer including Ni₂P and Fe₂P on a nickel foam will be described with reference to Fig. 6. Fig. 6 is a schematic cross-sectional view illustrating the present catalyst. The catalyst 40 illustrated in Fig. 6 has a phosphide layer 42 including Ni₂P and Fe₂P on a nickel foam 41. In the example of Fig. 6, the inner surface of pores also has the above layer structure. The above layer structure allows the catalyst to have excellent durability and high activity even in an alkaline environment while a nickel foam is used.

The nickel foam 41 has the same shape as the catalyst (I). Preferred embodiments are also the same.

In the catalyst (II), the phosphide layer 42 includes Ni₂P and Fe₂P. Since the phosphide layer in the catalyst (II) especially includes Fe₂P, the catalyst (II) has higher durability and activity than a catalyst having a layer including only Ni₂P on nickel foam.

The catalyst (II) has a thickness of preferably 100 to 2,000 µm, and more preferably 200 to 1,600 µm. When the nickel catalyst (II) has a thickness of 100 µm or more, the catalyst has excellent durability and activity.

The ratio of P in the catalyst (II) is preferably 10 to 50% by mass, and more preferably 20 to 30% by mass based on the total amount of the catalyst from the viewpoints of durability and activity.

The ratio of Fe in the catalyst (II) is preferably 1 to 10% by mass, and more preferably 1 to 3% by mass based on the total amount of the catalyst from the viewpoints of durability and activity.

The ratio of the total amount of Ni₂P and Fe₂P in the phosphide layer is preferably 50 to 100% by mass, more preferably 70 to 100% by mass, and even more preferably 85 to 100% by mass based on the total amount of the phosphide layer from the viewpoints of durability and activity.

It is preferable that the ratio between Ni₂P and Fe₂P in the phosphide layer be 9 : 1 to 5 : 5 in the mass ratio from the viewpoints of durability and activity.

In the catalyst (II), the phosphide layer has a thickness of preferably 50 to 500 nm and more preferably 100 to 400 nm. When the phosphide oxide layer has a thickness of 50 nm or more, a catalyst with excellent durability and activity can be obtained. When the phosphide layer has a thickness of 500 nm or less, the catalyst is sufficiently effective.

The thickness of the phosphide layer may be measured by a scanning electron microscope (SEM) and based on mapping with an energy dispersive X-ray spectrometer (EDX). The composition of the phosphide layer may be measured by X-ray photoelectron spectroscopy (XPS).

### (Method for producing catalyst (II))

Next, the method for producing the above catalyst (II) will be described. Examples of methods for producing the catalyst (II) include a method in which nickel foam is immersed in an iron ion solution and the nickel foam after immersion is phosphorized. A phosphide layer including Ni₂P and Fe₂P can be easily formed on a nickel foam by this method, and the resulting catalyst has excellent durability and activity.

In the present method, first a nickel foam having a desired shape is prepared, and the nickel foam is immersed in an iron ion solution. The iron ion solution is prepared by dissolving a dissociative iron compound in a solvent. Examples of iron compounds include iron chloride, and compounds that produce trivalent iron ions are preferred. The solvent usually includes water, and may also include other solvents. A solvent compatible with water is preferred as the other solvent, and examples thereof include methanol and ethanol. The concentration of iron ions in the solution is not particularly limited, and the solution has a concentration of iron ions of, for example, 0.01 to 0.5 mol/l.

The time of immersion of the nickel foam is not particularly limited, and the time may be suitably adjusted in the range of 10 minutes to 6 hours. The nickel foam after immersion may be dried according to need.

Next, the nickel foam after immersion is phosphorized. By phosphorizing with iron ions attached to the surface of the base material, a phosphide layer including Ni₂P and Fe₂P can be easily formed.

The method of phosphorization is not particularly limited, and a method in which the nickel foam is heated in the presence of a phosphorous compound is preferred. Specific examples thereof include a method in which a phosphorous compound and the nickel foam after immersion are placed in a furnace, and the two are heated in an inert gas atmosphere such as nitrogen gas.

When supplying inert gas to the furnace during heating, the phosphorous compound is disposed on the upstream and the nickel foam is disposed on the downstream to phosphorize them efficiently.

A phosphorous compound which decomposes at the heating temperature is preferred. Examples of phosphorus compounds include sodium hypophosphite.

The heating temperature may be suitably adjusted in consideration of the decomposition temperature of the phosphorus compound and the like, and the heating temperature is for example, in the range of 300 to 600°C, and preferably 350 to 550°C.

The anode 10 may also have the first diffusion layer 12 in addition to the anode catalyst 11. The first diffusion layer 12 may be suitably selected from known gas diffusion layers. Examples thereof include a foaming metal layer such as nickel foam, and a porous carbon layer.

The cathode 20 may have at least a cathode catalyst 21, and may also have the second diffusion layer 22. The cathode catalyst 21 is preferably metal or metal alloy. The metals and metal alloys may be suitably selected from known ones, and examples thereof include platinum, cobalt, nickel, palladium, iron, silver, gold, copper, iridium, molybdenum, rhodium, chromium, tungsten, manganese, ruthenium, a metal compound thereof, a metal oxide thereof and an alloy including two or more of them.

Furthermore, it is preferable that the cathode catalyst 21 be a porous body in consideration of the contact area with water and diffusion of water and gas. Examples of porous catalysts include a connected body of metal particles prepared by fusing particles of the above metal acting as a catalyst, a foamed body (foam) of the above metal, and a felt (nonwoven fabric) or mesh porous body made of a wire-shaped or fibrous metal.

The cathode catalyst 21 may be used after coating the surface of the above metal with a known electrolyte polymer. Meanwhile, since alkaline aqueous solution moves in the membrane electrode assembly 8 to achieve ionic conductivity in the present embodiment, the membrane electrode assembly 8 has excellent ionic conductivity even without using electrolyte polymer. Furthermore, the absence of the electrolyte polymer coating on the cathode catalyst further improves catalytic activity.

It is particularly preferable that the cathode catalyst include a porous body of metal or metal alloy. To achieve both durability and high activity, a catalyst having a layer including Ru and metal phosphide derived from metal or metal alloy on the porous body of metal or metal alloy (hereinafter referred to as catalyst (III)) is preferred.

### <Catalyst (III)>

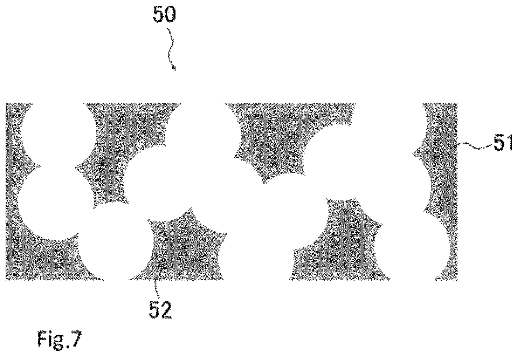

The catalyst having a layer including Ru and a phosphide compound on a porous body of metal or metal alloy will be described with reference to Fig. 7. Fig. 7 is a schematic cross-sectional view illustrating the present catalyst. The catalyst 50 illustrated in Fig. 7 has a layer 52 including Ru and metal phosphide on a porous body 51. The above layer structure achieves both durability and high activity.

The catalyst (III) has a layer including Ru and metal phosphide on a porous body. The composite layer of Ru and metal phosphide has higher durability and higher activity, for example, than the layer without a phosphide compound.

The catalyst (III) has a thickness of preferably 100 to 2,000 µm, and more preferably 200 to 1,600 µm. When the catalyst (III) has a thickness of 100 µm or more, the catalyst has excellent durability and activity.

Any metal may be used as the metal (M) constituting the porous body, and a metal capable of forming a phosphide is preferred from the viewpoint of the easiness in production of the catalyst. Specific examples of such metals include Fe, Cu, Ni and Ti, and Ni and Ti are preferred from the viewpoints of durability and activity of the catalyst. The metal constituting the porous body may be a single body or an alloy including two or more metals. The metal base material may also include other elements to the extent that the effect of the present embodiment is achieved.

The ratio of Ru in the catalyst (III) is preferably 0.1 to 40% by mass, and more preferably 0.5 to 30% by mass based on the total amount of the catalyst from the viewpoints of durability and activity.

The ratio of P in the catalyst (III) is preferably 10 to 50% by mass, and more preferably 20 to 30% by mass based on the total amount of the catalyst from the viewpoints of durability and activity.

It is preferable that the ratio between Ru and metal phosphide in the layer including Ru and metal phosphide be 9 : 1 to 5 : 5 in the mass ratio from the viewpoints of durability and activity.

In the catalyst (III), the layer including Ru and metal phosphide has a thickness of preferably 50 to 500 nm and more preferably 100 to 400 nm. When the layer including Ru and metal phosphide has a thickness of 50 nm or more, a catalyst with excellent durability and activity can be obtained. When the layer including Ru and metal phosphide has a thickness of 500 nm or less, the catalyst is sufficiently effective.

The thickness of the above layer may be measured by a scanning electron microscope (SEM) and based on mapping with an energy dispersive X-ray spectrometer (EDX, EDS). The composition of the above layer may be measured by X-ray photoelectron spectroscopy (XPS).

### (Method for producing catalyst (III))

Next, the method for producing the above catalyst (III) will be described. Examples of methods for producing the catalyst (III) include a method in which a porous body of metal or metal alloy is immersed in a Ru ion solution and the porous body after immersion is phosphorized. A layer including Ru and metal phosphide can be easily formed on a metal base material layer by this method, and the resulting catalyst has excellent durability and activity.

In the present method, first a desired porous body is prepared, and the porous body is immersed in a Ru ion solution. The Ru ion solution is prepared by dissolving a dissociative ruthenium compound in a solvent. Examples of ruthenium compounds include ruthenium chloride. The solvent usually includes water, and may also include other solvents. A solvent compatible with water is preferred as the other solvent, and examples thereof include methanol and ethanol. The concentration of iron ions in the solution is not particularly limited, and the solution has a concentration of, for example, 0.01 to 0.5 mol/l.

The time of immersion of the porous body is not particularly limited, and, for example, the time may be suitably adjusted in the range of 1 to 48 hours, and is preferably 12 to 36 hours. Long term immersion is likely to cause galvanic replacement between metal ions and Ru ions on the surface of the porous body, and this consequently improves durability of the resulting catalyst. The porous body after immersion may be dried according to need.

Next, the porous body after immersion is phosphorized (step (ii)). By phosphorizing with Ru ions attached to the surface of the base material, a layer including Ru and metal phosphide can be easily formed.

The method of phosphorization is not particularly limited, and a method in which the metal substrate is heated in the presence of a phosphorous compound is preferred. Specific examples thereof include a method in which a phosphorous compound and the porous body after immersion are placed in a furnace, and the two are heated in an inert gas atmosphere such as nitrogen gas.

When supplying inert gas to the furnace during heating, the phosphorous compound is disposed on the upstream and the porous body is disposed on the downstream to phosphorize them efficiently.

A phosphorous compound which decomposes at the heating temperature is preferred. Examples of phosphorus compound include sodium hypophosphite.

The heating temperature may be suitably adjusted in consideration of the decomposition temperature of the phosphorus compound and the like, and the heating temperature is for example, in the range of 300 to 600°C, and preferably 350 to 550°C.

The cathode 20 may also have the second diffusion layer 22 in addition to the cathode catalyst 21. The second diffusion layer 22 may be suitably selected from known gas diffusion layers. Examples thereof include a foaming metal layer such as nickel foam, and a porous carbon layer.

The present water electrolysis device may have a separator 13, 23 on the outer surface of the anode 10 and the cathode 20, respectively. For the material of the separator, the separator may not be coated with platinum or the like, and a separator made of carbon or stainless steel may be suitably selected and used. When the separators 13, 23 are conductive, the separator 13 may be used as the first main electrode and the separator 23 may be used as the second main electrode, and a power source 7 may be connected to the first main electrode and the second main electrode to apply voltage to the anode and the cathode.

The separators 13, 23 may have a gas flow path 14, 24. Oxygen generated in the anode 10 and hydrogen generated in the cathode 20 are each discharged through the gas flow paths 14, 24 and stored in a storage tank and the like.

The power source 7, which is not particularly limited, may be suitably selected from known direct current power sources. The present water electrolysis device is highly responsive to input power, and thus can be suitably used even for renewable energy sources with large fluctuations, such as solar power generation and wind power generation.

### Examples

Hereinafter the present invention will be described in more detail with reference to Examples. The present invention is not limited to those illustrations and may be suitably modified without departing from the scope and spirit of the present invention.

### [Example 1: Preparation of membrane]

A membrane of a polymer including the structure represented by the formula (1) (in which L¹ is -OCF₂CF(CF₃)OCF₂CF₂- and R¹ is sulfonic acid group) (Nafion 211) was immersed in a 1M nitric acid aqueous solution and heated at 90°C for 1 minute. Next the membrane was immersed in water and heated at 100°C for 1 hour. Subsequently, the membrane was immersed in a 1M aqueous sodium hydroxide solution and allowed to stand at room temperature for 12 hours. After that, the membrane was immersed in glycerol and heated at 180°C for 1 hour. Then the membrane was washed with 1M hydrochloric acid and immersed in a 1M aqueous potassium hydroxide solution and allowed to stand for 12 hours to give the membrane of Example 1. The resulting membrane had a film thickness of 27 µm in the dry state and 40 µm when swollen with water.

### [Comparative Example 1: Preparation of membrane]

Nafion 211 was immersed in a 1M aqueous nitric acid solution and heated at 90°C for 1 hour. Next the membrane was immersed in water and heated at 100°C for 1 hour. Then the membrane was immersed in a 1M aqueous potassium hydroxide solution and allowed to stand for 12 hours to give the membrane of Comparative Example 1. The resulting membrane had a film thickness of 25 µm in the dry state and 28 µm when swollen with water.

### <Measurement of cluster size>

The membranes of the above Example 1 and Comparative Example 1 were subjected to SAXS measurement at 28°C and a humidity of 86 to 87% RH while the membranes were kept in equilibrium. The spectrum of Comparative Example 1 is shown in Fig. 2A and the spectrum of Example 1 is shown in Fig. 2B. The results of analysis are also shown in the following Table 1.

### [Table 1]

**Table 1**

| Membrane | Peak-1 | | Peak-2 | |
|---|---|---|---|---|
| | 2θ (deg) | d-spacing (nm) | 2θ (deg) | d-spacing (nm) |
| Comparative Example 1 | 0.86 | 10 | 2.0 | 4.3 |
| Example 1 | 0.86 | 10 | 1.5 | 5.7 |

As shown in Table 1, the results of analysis of the cluster size of Peak-2 are that the membrane of Comparative Example 1 has an average cluster size of 4.3 nm and the membrane of Example 1 has an average cluster size of 5.7 nm.

### <Production of membrane electrode assembly (MEA)>

### (Production Example 1: Production of anode catalyst)

A commercially available Ni foam was uniformly pressed so that the thickness was 200 µm. The Ni foam was cut into 1 cm², acid-treated with HCl and washed with ethanol and water. Next, the Ni foam was immersed in 1M KOH, and a nickel oxide layer including NiOOH was formed by oxidizing the surface of the Ni foam by applying 2.5 V vs RHE for 1 minute using a 10 cm² Ni foam counter electrode and a Hg/ HgO reference electrode to give an intermediate product. The above intermediate product was immersed in an electrolyte solution including 25 mM Fe²⁺, (NH₄)2SO₄, H₂SO₄ and water, whose pH was adjusted to 3 or less and which was deaerated with N₂. Fe was electrodeposited using a Pt counter electrode and an Ag/ AgCl reference electrode by chronoamperometry to give an anode catalyst with a nickel oxide layer having a thickness of about 250 nm.

### (Production Example 2: Production of cathode catalyst)

A commercially available Ni foam was uniformly pressed so that the thickness was 200 µm. About 0.2 mg of RuCl₃ was dissolved in 50 ml of deionized water to prepare a Ru ion solution. The above nickel foam was immersed in the Ru ion solution and the solution was kept for 24 hours to induce galvanic replacement between Ni ions on the surface of the base material and Ru ions. After the immersion, the nickel foam was dried in air to give an Rumodified metal base material.

High purity nitrogen was allowed to flow in a furnace at a flow rate of 60 SCCM, and sodium hypophosphite was provided on the upstream of the furnace and the Ru modified metal base material after immersion was provided on the downstream of the furnace. The temperature was increased at a rate of 3°C/ minute, and the base material was phosphorized by keeping it at 350°C for 4 hours to give a cathode catalyst.

### (Production Example 3: Production of MEA)

MEA of Example 1 was produced by arranging the anode catalyst on one side of the membrane of Example 1 and arranging the cathode catalyst on the other side.

The membrane of Comparative Example 1 was treated in the same manner to give MEA of Comparative Example 1.

### <Evaluation of performance of MEA>

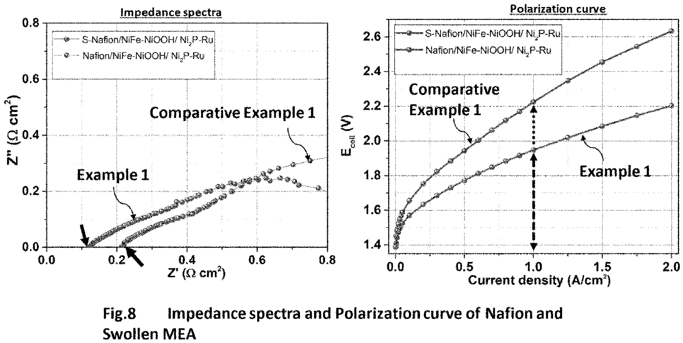

At a cell temperature of 80°C, a 1M KOH aqueous solution (flow rate 5 mL · min⁻¹) was supplied to the anode, and the performance of the solid alkaline water electrolysis cell was evaluated. For the evaluation of the cell, a charge/ discharge system (HJ1010SD8 made by Hokuto Denko) and an impedance analyzer (Solartron 1260 made by Solartron Analytical) were used. In the impedance test, the resistance when the cell was operated at a voltage of 1.5 V was measured by the impedance analyzer. The impedance spectrum and the polarization curve are shown in Fig. 8. The cell resistance at 1.5 V and the voltage at 1 A cm⁻² are shown in the following Table 2. The lower the voltage at 1 A cm⁻², the higher the water electrolysis performance.

### [Table 2]

**Table 2**

| MEA | Cell resistance at1.5V (Ω cm²) | Cell voltage at 1A/cm² (V) |
|---|---|---|
| Comparative Example 1 | 0.215 | 2.22 |
| Example 1 | 0.125 | 1.94 |

### <Results>

Table 2 and Fig. 8 show that the MEA using the membrane of Example 1 including a fluoro compound having an ionic group and having a conductance of 5 S/cm² or more has excellent OH⁻ conductivity and high water electrolysis performance.

### [Example 2: Production of membrane]

A porous base material made of polytetrafluoroethylene (PTFE) having a film thickness of 25 µm and a dispersion in which a polymer including the structure represented by the formula (1) (Nafion) was dispersed in an isopropanol - water mixed solvent were prepared. The dispersion was dropped onto the porous base material impregnated with acetone to fill the pores with the polymer. The resulting membrane was dried at 100°C for 12 hours. The membrane obtained was treated in the same method as in Example 1 to give the membrane of Example 2. The membrane of Example 2 had a film thickness of 31 µm when swollen with water.

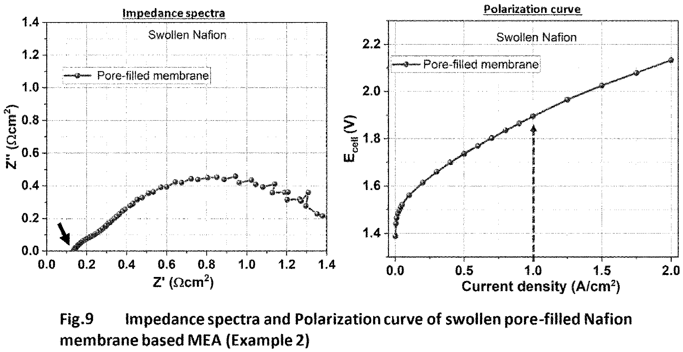

A membrane electrode assembly (MEA) was produced using the membrane of Example 2, the above anode catalyst and the cathode catalyst, and the performance of MEA was evaluated by the above method. The results are shown in Fig. 9 and Table 3.

### [Table 3]

**Table 3**

| MEA | Cell resistance at 1.5V (Ω cm²) | Cell voltage at 1A/cm² (V) |
|---|---|---|
| Example 2 | 0.123 | 1.86 |

### <Results>

Table 3 and Fig. 9 show that the membrane of Example 2 prepared by filling the porous base material with a fluoro compound has the same level of performance as the membrane of Example 1.

### [Example 3: Production of composite membrane and MEA]

A membrane (also referred to as the second membrane) was prepared in the same manner as in Example 1 (Preparation of membrane). The dispersion used in Example 2 was separately prepared. A composite membrane was prepared by forming the first membrane having a thickness of 2 to 3 µm by applying the above dispersion to one surface of the second membrane by spin coating. The composite membrane had a film thickness of 43 µm when swollen with water.

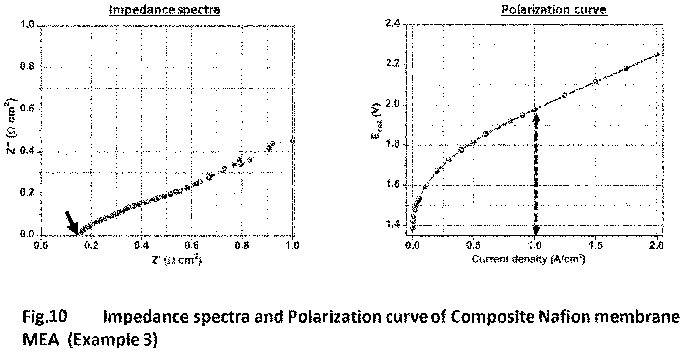

MEA of Example 3 was produced in the same manner as in Production Example 3 using the resulting composite membrane, and the performance of MEA was evaluated by the above method. The results are shown in Fig. 10 and Table 4.

### [Table 4]

**Table 4**

| MEA | Cell resistance at 1.5V (Ω cm²) | Cell voltage at 1A/cm² (V) |
|---|---|---|
| Example 3 | 0.153 | 1.98 |

### <Results>

Table 4 and Fig. 10 show that although the OH⁻ conductivity of MEA of Example 3 is slightly smaller than that of Example 1, MEA of Example 3 has higher OH⁻ conductivity than that of Comparative Example 1, and has high water electrolysis performance.

### <Conductance and conductivity>

The conductance and the conductivity of the membranes were calculated as follows based on the results of the above Examples and Comparative Examples. Ohmic loss R (Ω cm²) was calculated from the respective impedance spectra. The reciprocal number 1/R of the ohmic loss R is conductance C (S/cm²). Conductivity CT (S/cm) was calculated using the film thickness T (cm) of the respective membranes when swollen. Those values are shown in the following Table 5.

### [Table 5]

**Table 5**

| | IR loss (Ω cm²) | Conductance (S/cm²) | Thickness at Swollen state (cm) | Conductivity (S/cm) |
|---|---|---|---|---|
| Comparative Example 1 | 0.215 | 4.65 | 0.0028 | 1.3×10⁻² |
| Example 1 | 0.125 | 8.00 | 0.0040 | 3.2×10⁻² |
| Example 2 | 0.123 | 8.13 | 0.0031 | 2.5×10⁻² |
| Example 3 | 0.153 | 6.54 | 0.0043 | 2.8×10⁻² |

As shown in Table 5, the membranes of the present invention achieved a conductance of 5 S/cm² or more and a conductivity of 2 × 10⁻² S/cm, showing higher OH⁻ ion conductivity than commercially available Nafion.

### [Example 4]

A cast membrane was prepared by using a dispersion (Aquivion D72) including a structure represented by the formula (1) (in which L¹ is -OCF₂CF- and R¹ is a sulfonic acid group). The resulting membrane was immersed in a 1M aqueous nitric acid solution and allowed to stand for 1 hour. Next the membrane was immersed in water and allowed to stand for 1 hour. Subsequently, the membrane was immersed in a 1M aqueous sodium hydroxide solution and allowed to stand for 12 hours. Next the membrane was immersed in glycerol and allowed to stand for 1 hour. Then the membrane was washed with 1M hydrochloric acid and immersed in a 1M aqueous potassium hydroxide solution and allowed to stand for 12 hours to give the membrane of Example 4. The resulting membrane had a film thickness of 42 µm when swollen with water.

### [Example 5]

The membrane of Example 5 was prepared in the same manner as in Example 4 except for changing Aquivion D72 to Aquivion D79 in Example 4 above. The resulting membrane had a film thickness of 45 µm when swollen with water.

### [Comparative Example 2]

A commercially available membrane (Aquivion E87) was prepared, and the membrane was immersed in a 1M aqueous potassium hydroxide solution and allowed to stand for 12 hours to give a membrane having a film thickness of 50 µm.

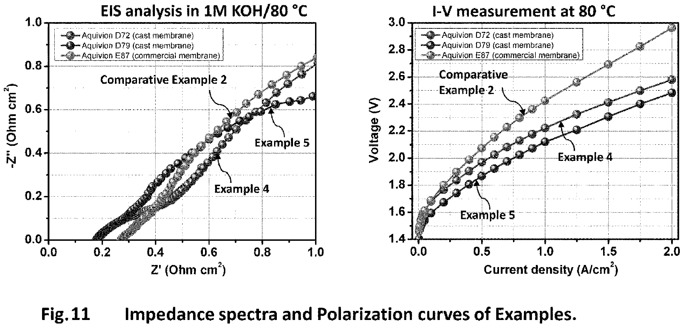

A membrane electrode assembly (MEA) was produced using the membrane of Examples 4 and 5, or Comparative Example 2, the anode catalyst and the cathode catalyst, and the performance of MEA was evaluated by the above method. The results are shown in Fig. 11 and Table 6. Table 6 also shows values of the conductance and the conductivity of the membrane.

### [Table 6]

**Table 6**

| | Cell resistance at1.5V (Ω cm²) | Cell voltage at 1A/cm² (V) | Conductance (S/cm²) | Thickness at Swollen state (cm) | Conductivity (S/cm) |
|---|---|---|---|---|---|
| Example 4 | 0.185 | 2.22 | 5.41 | 0.0042 | 2.3×10⁻² |
| Example 5 | 0.182 | 2.12 | 5.49 | 0.0045 | 2.4×10⁻² |
| Comparative Example 2 | 0.271 | 2.42 | 3.69 | 0.0050 | 1.8×10⁻² |

As shown in Table 6, the membrane of the present invention achieved a conductance of 5 S/cm² or more, showing that MEA with low cell resistance can be produced.

### [Example 6: Production of composite membrane and MEA]

A cast membrane (film thickness 7 µm) (the first membrane) was prepared using a polyarylene polymer represented by the following formula (trimethyl ammonium modified poly-(fluorene-alt-tetrafluorophenylene) with reference to Japanese Unexamined Patent Application Publication No. 2021-042351.

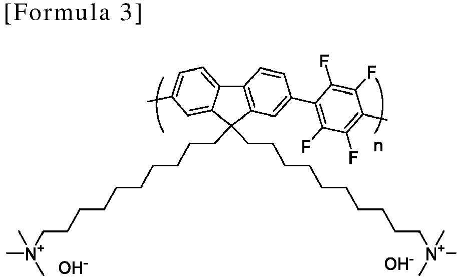

A membrane of Aquivion D79 (the second membrane) was prepared in the same manner as in Example 5 except for the film thickness. The membrane had a film thickness of 51 µm when swollen with water.

The first membrane and the second membrane were bonded to give a composite membrane with the layer structure shown in Fig. 3A.

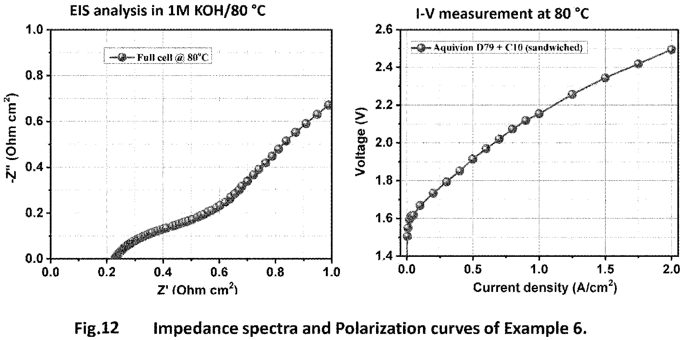

A membrane electrode assembly (MEA) was produced using the composite membrane of Example 6, the above anode catalyst and the cathode catalyst, and the performance of MEA was evaluated by the above method. The results are shown in Fig. 12 and Table 7. Table 7 also shows values of the conductance and the conductivity of the membrane.

### [Table 7]

**Table 7**

| | Cell resistance at1.5V (Ω cm²) | Cell voltage at 1A/cm² (V) | Conductance (S/cm²) | Thickness at Swollen state (cm) | Conductivity (S/cm) |
|---|---|---|---|---|---|
| Example 6 | 0.230 | 2.15 | 3.91 | 0.0064 | 2.5×10⁻² |

The gas permeation through the composite membrane of Example 6 was reduced to 1/10 to 1/100 the gas permeation through the single membrane of Example 5, while the water electrolysis performance was maintained.

### Industrial Applicability

As described above, since the membrane of the present invention has excellent OH⁻ ion conductivity and excellent durability, the membrane can be suitably used for a water electrolysis device with high water electrolysis performance. Furthermore, the membrane of the present invention can be used in not only water electrolysis but also various electrolysis technologies including production of ethylene by the reduction of carbon dioxide.

This application claims priority to Japanese Patent Application No. 2021-184821 filed on November 12, 2021 and Japanese Patent Application No. 2022-37354 filed on March 10, 2022, which are herein incorporated by reference in their entirety.

### Reference Signs List

1 WATER ELECTROLYSIS DEVICE, 5 MEMBRANE, 6 CELL, 7 POWER SOURCE, 8 MEMBRANE ELECTRODE ASSEMBLY, 10 ANODE (ANODE ELECTRODE), 11 ANODE CATALYST, 12 FIRST DIFFUSION LAYER, 13 SEPARATOR, 14 GAS FLOW PATH, 20 CATHODE (CATHODE ELECTRODE), 21 CATHODE CATALYST, 22 SECOND DIFFUSION LAYER, 23 SEPARATOR, 24 GAS FLOW PATH, 30,40 ANODE CATALYST, 31,41 NICKEL FOAM, 32 NICKEL OXIDE LAYER, 33 LAYER INCLUDING NiFe, 42 PHOSPHIDE LAYER, 50 CATHODE CATALYST, 51 POROUS BODY OF METAL OR METAL ALLOY, 52 LAYER INCLUDING Ru AND METAL PHOSPHIDE, 60 COMPOSITE MEMBRANE, 61 FIRST MEMBRANE, 62 SECOND MEMBRANE

## Claims

1. A membrane comprising a fluoro compound having an ionic group, wherein the membrane has OH⁻ ion conductivity and has a conductivity of more than 2 × 10⁻² S/cm in an alkaline aqueous solution.

2. The membrane according to claim 1, having a conductance of 5 S/cm² or more in an alkaline aqueous solution.

3. The membrane according to claim 1 or 2, having a film thickness of 1 to 100 µm.

4. The membrane according to any one of claims 1 to 3, wherein the fluoro compound has an ion exchange capacity of 1,200 g/eq or less.

5. The membrane according to any one of claims 1 to 4, wherein the fluoro compound has an ion exchange capacity of 1,000 g/eq or less.

6. The membrane according to any one of claims 1 to 5, wherein the fluoro compound has a structure represented by the following formula (1): 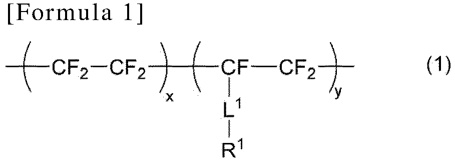 wherein R¹ is an ionic group, L¹ is a divalent linking group, and x and y are each independently an integer of 1 or more.

7. The membrane according to claim 6, wherein L¹ is a group represented by the following formula (2):
*-(O)ₐ-R²-** (2)
wherein R² is a fluoroalkylene group having 1 to 20 carbon atoms and optionally having an ether bond between the carbon-carbon bond,
a is 0 or 1, and
* is a bond with the main chain and ** is a bond with R¹.

8. The membrane according to claim 7, wherein R² is a fluoroalkylene group having 1 to 4 carbon atoms.

9. The membrane according to any one of claims 1 to 8, wherein the ionic group is a sulfonic acid group.

10. The membrane according to any one of claims 1 to 9, wherein a porous base material is filled with the fluoro compound.

11. The membrane according to any one of claims 1 to 10, wherein the membrane has an average cluster size of 5 nm or more.

12. A composite membrane comprising the membrane according to any one of claims 1 to 11 on at least one surface of a first membrane,
wherein the first membrane is a non-porous membrane, a membrane with a cluster having an average cluster size of less than 5 nm, or a pore-filling membrane comprising a porous base material and a polyarylene polymer with which pores of the porous base material are filled.

13. A membrane electrode assembly comprising the membrane according to any one of claims 1 to 11 or the composite membrane according to claim 12,
an anode catalyst, and
a cathode catalyst.

14. The membrane electrode assembly according to claim 13, wherein the anode catalyst comprises a porous body of metal or metal alloy.

15. The membrane electrode assembly according to claim 13, wherein the anode catalyst comprises a nickel foam.

16. The membrane electrode assembly according to claim 13, wherein the anode catalyst is
a catalyst comprising a nickel oxide layer comprising NiOOH and a layer comprising NiFe on a nickel foam in that order, or
a catalyst comprising a phosphide layer comprising Ni₂P and Fe₂P on a nickel foam.

17. The membrane electrode assembly according to any one of claims 13 to 16, wherein the cathode catalyst comprises a porous body of metal or metal alloy.

18. The membrane electrode assembly according to any one of claims 13 to 16, wherein the cathode catalyst comprises a layer comprising Ru and metal phosphide on the porous body.

19. A water electrolysis device comprising the membrane electrode assembly according to any one of claims 13 to 18.
